# EUROPEAN PATENT APPLICATION

(11) **EP 4 645 760 A1**
(43) Date of publication of application: **05.11.2025**
(21) Application number: 24173653.7
(22) Date of filing: 01.05.2024
(51) Int. Cl.: H04L 9/40, H04L 67/02, H04L 67/2876, H04L 67/2895

(54) **SECURE COMMUNICATION BETWEEN A CLIENT DEVICE AND ONE OR MORE SERVER DEVICES**

(71) Applicant: Quantum Gateway Solutions B.V., 1098 XH Amsterdam (NL)
(72) Inventor: van Esch, Dimitri Valerie, 1098 XH Amsterdam (NL)
(74) Representative: De Vries & Metman

(57) **Abstract**

Method and systems for secure data communication between a client device and one or more server devices, wherein the method comprises: configuring a client proxy and an associated tunnel client on the client device based on configuration information, the configuration information server application information comprising one or more server application identifiers, preferably one or more URLs, for identifying one or more server applications running on the one or more server devices respectively and address information indicative of one or more server proxies and one or more tunnel servers respectively; establishing one or more tunnel connections between the client tunnel and the one or more tunnel servers respectively based on a tunneling protocol and based on the address information, the one or more tunnel connections being associated with one or more encryption protocols respectively; and, transmitting data packets associated with one or more client applications running on the client device to one or more server devices, the transmission of the data packets including the client proxy using the server application information and the address information to forward a data packet via one of the one or more tunnels to one of the one or more server devices.

## Description

### Technical field

The embodiments relate to secure data communication, and, in particular, though not exclusively, to methods and systems for secure data communication between a client device and one or more server devices and a computer program product for executing such methods.

### Background

Advancements in quantum computing can pose a substantial threat to security and the currently used public-key algorithms and associated protocols will become vulnerable to adversaries. To counter this treat, improved cryptographic protocols have been developed and a new quantum-safe protocol named Kyber has been selected as the new standard for key encapsulation, amongst three other protocols for signing. Migration to new cryptographic schemes will pose enormous challenges for organizations that rely on secure communication and data storage. All hardware, software and services that use public-key protocols need to be replaced or updated.

To facilitate this transition various solutions and services have been developed, which allow quantum-safe data communication for at least part of the data connection, without requiring replacement of the hardware and software at the client side. For example, Cloudflare^{™}, a content delivery service provider, offers a secure post-quantum tunnel between two Cloudflare servers, which can be accessed by client through a conventionally encrypted communication channel. Although it provides a secure tunnel for part of the data path, this solution does not provide a secure tunnel that spans the entire communication link between the endpoints.

US2022/0311753 describes a gateway device, which can detect is a client device wants to connect to a server based on an unsafe protocol. If that is the case, the gateway will set up a quantum secure connection between the gateway and the server wherein the gateway decrypts incoming data and re-encrypts the data using a secure protocol. Also this solution does not provide a true quantum safe endpoint to endpoint connection. Moreover, decryption of data at the gateway will introduce an insecurity within the data communication path.

Hence, from the above it follows there is a need in the art for improved methods and systems for efficient implementation of endpoint-to-endpoint secure, preferably quantum-safe, data communication without the need to modify backend- and terminal applications.

### Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments in this disclosure relate to a method for secure data communication between a client device and one or more server devices, wherein the method may comprise: configuring a client proxy and an associated tunnel client on the client device based on configuration information, the configuration information including server application information comprising one or more server application identifiers, preferably one or more URLs, for identifying one or more server applications running on the one or more server devices respectively and address information indicative of one or more server proxies and one or more tunnel servers respectively; establishing one or more tunnel connections between the client tunnel and the one or more tunnel servers respectively based on a tunneling protocol and based on the address information, the one or more tunnel connections being associated with one or more encryption protocols respectively; and, transmitting data packets associated with one or more client applications running on the client device to one or more server devices, the transmission of the data packets including the client proxy using the server application information and the address information to forward a data packet via one of the one or more tunnels to one of the one or more server devices.

The embodiments provide a method for secure data communication between a client device and different servers, using multiple tunnels with the options of using different encryption methods for each tunnel, that can be active simultaneously. Multiple tunnels can be operated at the same time through the client proxy to multiple service providers with the option of using different encryption methods for each tunnel. The client proxy and server proxy may be installed alongside an existing application (both at the client and server side) and redirect traffic from the client device to a server device via secure tunnel that is associated with a cryptographic protocol, preferably a quantum secure cryptographic protocol. This way, a secure communication path between the client device and a server can be efficiently realized without the need to change existing applications. The embodiments may be used as a failover system that can operate without affecting the currently active communication connections.

The embodiments use a proxy system in combination with a tunnel system to realize multiple encrypted tunnels for data communication for fast realization of quantum-safe data end-to-end data communication without the need to change the client and server application software. This is particular advantageous when fast migration from data communication based on a legacy encryption system to data communication based on quantum-safe encryption system is needed.

In an embodiment, each data packet may include a server application identifier for identifying a destination server application to which the data packet needs to be sent, the client proxy forwarding the data packet if the server application identifier in the data packet matches one of the one or more server application identifiers in the configuration information.

In an embodiment, the transmission of the data packets may further include forwarding a data packet via a further data connection, preferably a https data connection, to a server application identified by the server identifier, the further data connection being associated with an encryption protocol that is different from the one or more encryption protocols associated with the one or more tunnels.

In an embodiment, the address information may include network addresses and/or port numbers associated with the one or more tunnel servers and/or one or more server proxies.

In an embodiment, the one or more encryption protocols are based on a post-quantum encryption protocol, preferably a post-quantum encryption protocol based at least one of: a lattice-based cryptographic system, a multivariate-based cryptographic system, a Hash-based cryptographic system, a code-based cryptographic system; or, an elliptic curve-based cryptographic system.

In an embodiment, a plurality of tunnel connections may be established between the client tunnel and a plurality of tunnel servers and wherein at least part of the plurality of tunnels are associated with different encryption protocols.

In an embodiment, the tunnel protocol may be an application layer tunnel protocol, preferably a secure shell (SSH) tunnel protocol.

In an embodiment, the data packet may be a HTTP data packet transmitted based on a HTTP protocol to a server.

In an embodiment, the client proxy may use a forwarding table to transmit the data packet to one of the one or more tunnels, the forwarding table including information for associating each of the one or more server application identifiers to a network address of one of the one or more proxy servers, preferably the network address including an IP address and a port number.

In an embodiment, forwarding the data packets to the client proxy may include transmitting the data packets to a data port of the client proxy and/or wherein the client proxy is configured to forward data packets associated with a predetermined set of server application identifiers over the one or more tunnels.

In an embodiment, the configuration information may be sent from a cloud service associated with the one or more servers to the client device,

In an embodiment, the method may further include: authenticating the client proxy to server proxy based on an authentication protocol, preferably a public-private key authentication protocol, the authentication including sending a public key from the cloud server to the server proxy.

In another aspect, the embodiments may relate to a method for secure communication between a client device and a server device, the method comprising: receiving or determining configuration information for configuring a server proxy and a tunnel server, the configuration information including server application information comprising one or more server application identifiers, preferably one or more URLs, for identifying the one or more server applications running on the server device and address information associated with the server proxy and the tunnel server; receiving by the tunnel server a request from the client device for establishing a secure tunnel connection between the tunnel client and the tunnel server; establishing a tunnel between a tunnel client and the tunnel server based on a tunneling protocol and based on the address information, the tunnel being associated with an encryption protocol; receiving by the server proxy data packets transmitted via the tunnel to the server proxy, the data packets being associated with one or more client applications running on the client device, each data packet including a server application identifier; and, forwarding, by the server proxy, the data packets to one of the one or more server applications based on the server application identifier.

In a further aspect, the embodiments may relate to a client device for secure communication, comprising: a computer readable storage medium having computer readable program code embodied therewith, and a processor, preferably a microprocessor, coupled to the computer readable storage medium, wherein responsive to executing the computer readable program code, the processor being configured to perform executable operations comprising: configuring a client proxy and an associated tunnel client on the client device based on configuration information, the configuration information server application information comprising one or more server application identifiers, preferably one or more URLs, for identifying one or more server applications running on the one or more server devices respectively and address information indicative of one or more server proxies and one or more tunnel servers respectively; establishing one or more tunnel connections between the client tunnel and the one or more tunnel servers respectively based on a tunneling protocol and based on the address information, the one or more tunnel connections being associated with one or more encryption protocols respectively; and, transmitting data packets associated with one or more client applications running on the client device to one or more server devices, the transmission of the data packets including the client proxy using the server application information and the address information to forward a data packet via one of the one or more tunnels to one of the one or more server devices.

In a further embodiment, the executable operations may further comprise any of the method steps as defined above.

In yet another aspect, the embodiments may relate to a server system comprising: a server proxy, a tunnel server associated with the server proxy; one or more server applications, and, a computer readable storage medium having computer readable program code embodied therewith, and a processor, preferably a microprocessor, coupled to the computer readable storage medium, wherein responsive to executing the computer readable program code, the processor being configured to perform executable operations comprising: receiving or determining configuration information for configuring the server proxy and the tunnel server, the configuration information including server application information comprising one or more server application identifiers, preferably one or more URLs, for identifying the one or more server applications running on the server system and address information associated with the server proxy and the tunnel server; receiving by the tunnel server a request for establishing a secure tunnel connection between the tunnel client and the tunnel server; establishing a tunnel between a tunnel client and the tunnel server based on a tunneling protocol and based on the address information, the tunnel being associated with an encryption protocol; receiving by the server proxy data packets transmitted via the tunnel to the server proxy, the data packets being associated with one or more client applications running on the client device, each data packet including a server application identifier; and, forwarding, by the server proxy, the data packets to one of the one or more server applications based on the server application identifier.

In an embodiment, the server proxy may be configured as a load balancer.

The invention may also relate to a computer program product comprising software code portions configured for, when run in the memory of a computer, executing the method steps according to any of process steps described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a system for secure data communication according to an embodiment;
**Fig. 2** depicts a method of secure data communication according to an embodiment;
**Fig. 3** depicts a system for secure data communication in which the configuration of the client proxy and server proxies are illustrated;
**Fig. 4** depicts a sequence diagram for setting up a system for secure data communication according to an embodiment;
**Fig. 5** depicts a sequence diagram of a method for secure data communication according to an embodiment;
**Fig. 6** depicts a block diagram illustrating an exemplary data processing system that may be used with embodiments described in this disclosure.

### Description of the embodiments

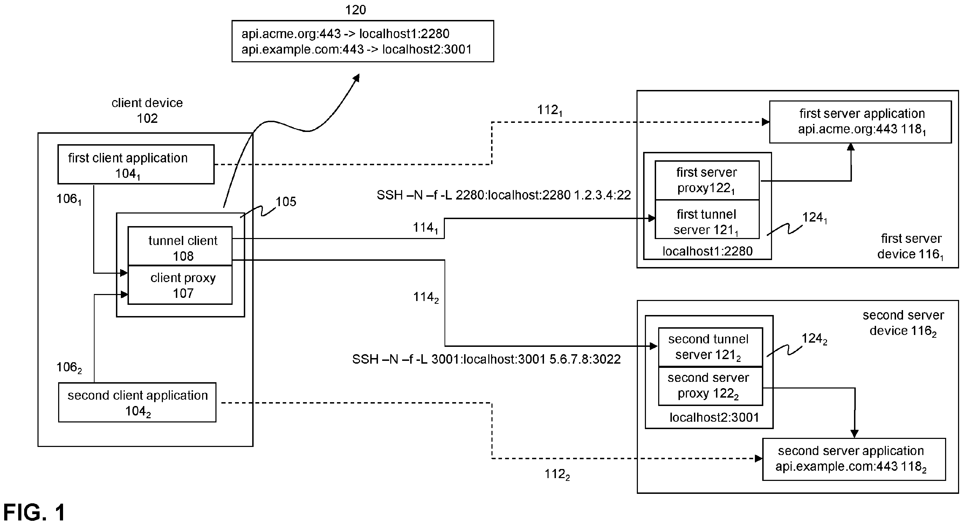

The embodiments in this disclosure relate to methods and systems for implementing endpoint to endpoint secure data communication without affecting terminal and backend applications. An example of an embodiment is depicted in **Fig. 1****.** In particular, the figure depicts a system for secure data communication according to an embodiment. The system may include a client device **102** and one or more server devices, e.g. a first server **116₁** and a second server device **116₂.** The client device may be configured to run client applications, e.g. a first and second client application **104_{1,2}**, which may be configured to establish conventional data connections **112_{1,2}**, e.g. conventional HTTPS data connections, with associated server applications **118_{1,2}** that run on the one or more servers, e.g. a first server application running on the first server and a second server application running on the second server. The server applications may be identified based on server identifiers, e.g. a network address or a URL, e.g. api.acme.org and api.example.com. The conventional data connections may include encryption of data using an encryption protocol to enable secure communication. HTTPS uses the Transport Layer Security (TLS) protocol, which is a widely used security protocol, protecting information exchanged between web clients and servers. While TLS is secure against current classical attacks, the asymmetric cryptography in TLS is vulnerable to future attacks from quantum computers.

To address this problem, the embodiments in this disclosure use client proxies and tunnel clients and associated server proxies and tunnel servers, which are installed on the client device and the server devices respectively. Here, a client proxy is a proxy server at the client side, e.g. a client device for executing client applications. Such client proxy may function as a forward proxy for handling client traffic. Similarly, a server proxy is a proxy server at the server side, e.g. a server device for executing server applications. Such server proxy server may function as a reverse proxy for handing client requests.

As shown in the figure, a client proxy **107** and an associated tunnel client **108** may be installed on the client device. The client proxy and associated tunnel client may be referred to as a proxy-tunnel client **105.** The tunnel client may be configured to set up one or more secure encrypted tunnel connections **114_{1,2}** (in short "a tunnel") with associated tunnel servers **121_{1,2}** installed on server devices **116_{1,2}**.

Each tunnel server may be associated with server proxy **122_{1,2}** and together they may be referred as a proxy-tunnel server **124_{1,2}**. As will be described hereunder in more detail, the client proxy and the server proxies may form a proxy system for forwarding data, in particular data packets, originating from client applications via secure tunnel connections **114_{1,2}**. This way, conventional data connections **112_{1,2}**, e.g. https data connections, may be replaced by secure tunnels connections for which data are encrypted based on an encryption protocol that is more secure that current encryption schemes. Each tunnel may - for example - be associated with an encryption protocol that is quantum safe. Such encryption protocols may be based on a lattice-based cryptographic system, a multivariate cryptographic system, a Hash-based cryptographic system, a code-based cryptographic system; or an elliptic curve-based cryptographic system.

The tunnels may be established using any suitable tunnel protocol. In an embodiment, the tunnels may be encrypted tunnels. In an embodiment, an encrypted tunnel may be implemented as a secure shell SSH forwarding tunnel. To that end, the tunnel client may be a SSH client and the one or more tunnel servers may be one or more SSH servers, which control the setup and encryption and decryption of data transmitted through the tunnel. Instead of an encrypted SSH tunnel, any other suitable encrypted tunnel system may be wherein tunnel clients and servers may be used setup secure connections and wherein associated client proxy and servers may be used to route data packets over the tunnels to destination servers.

A first command SSH -N -f -L 2280:localhost1:2280 1.2.3.4:22 may be used to set up a first tunnel **114₁ ,** wherein 1.2.3.4:22 defines the IP address of a first tunnel host (first tunnel server **121₁)** and the associated tunnel port and wherein localhost:2280 defines the IP address of the server proxy and its associated port. In a similar way, a second command SSH -N -f -L 3001:localhost2:3001 5.6.7.8:3022 may be used to setup up a second tunnel **114_{2,}** wherein 5.6.7.8:3022 defines the IP address of a second tunnel host (second tunnel server **121₂**) and the associated tunnel port and wherein localhost2:3001 defines the IP address of the server proxy and its associated port. To configure a client to establish tunnels and forward packets through the tunnels to server applications installed on server devices in the network, a client may be configured based on client configuration information. Table 1 provides an example of client configuration that is accessible to the client proxy:

| Tunnel information: | | | Server information: | | |
|---|---|---|---|---|---|
| | - tunnel_id: 11 | | | - server_id: 21 | |
| | | host: 1.2.3.4 | | | backend_url: api.acme.org |
| | | port: 22 | | | backend_port: 443 |
| | | method: proxy | | | forwarding_port: 2280 |
| | - tunnel_id: 12 | | | | localhost1 |
| | | host: 5.6.7.8 | | | tunnel_id: 11 |
| | | port: 3022 | | - server_id: 22 | |
| | | method: proxy | | | backend_url: |
| | | | api.example.com | | |
| | | | | | backend_port: 443 |
| | | | | | forwarding_port: 3001 |
| | | | | | localhost2 |
| | | | | | tunnel_id: 12 |

As shown in the table, the information may include tunnel information associated with the tunnel system, including information about the tunnel hosts (e.g. an IP address or URL, a tunnel port and a tunnel identifier). As shown in the example, the configuration information includes information about two tunnels (with tunnel IDs, 11 and 12) and the associated tunnel hosts.

The information may further include server information for each server device. The server information may include a server identifier of a server device on which a tunnel server and a server proxy is installed, one or more server applications identifiers of one or more server applications that are installed on the server device. These server application identifiers may include e.g. one or more backend URLs, and associated ports. The server information may further include an IP address or URL of the server proxy and an associated forwarding port associated the server proxy. As shown in **Fig. 1** based on the IP address of the server proxy and the forwarding port (localhost1:2280 and Iocalhost2:3001), the client proxy may relay packets that include an URL of a server application (api.acme.org and api.example.com and associated port numbers) via a designated tunnel to the server device on which the server application is running.

The configuration information may be stored in a table **120,** referred to as a forwarding table, which the client proxy may use to forward packets, which comprise information about an end point, e.g. a destination server application, to which the packets need to be sent. For example, based on the table depicted in **Fig. 1****,** the proxy-tunnel client may forward packets including an URL of a destination server application api.acme.org to port 2280 of the first server proxy **122₁** that has a network address localhost1 and packets including an URL of a destination server application api.example.com to port 3001 of the second server proxy **122₂** that as a network address localhost2.

This way, a data packet originating from the first client application **104₁** may be - for example - forwarded via the first tunnel **114₁** to the first server proxy **122₁.** The first server proxy receiving the packet may subsequently forward the packet to the first server application **118₁**. Similarly, a data packet originating from the second client application **104₂** may be - for example - forwarded via the second tunnel **114₂** to the second server proxy **122₂**. The second server proxy receiving the packet may subsequently forward the packet to the second server application **118₂.**

Data packets related to the client proxy may include data packets associated with other client applications (not shown) running on the client device, which need to be sent to server applications that are not identified in the configuration information. These packets will not be forwarded by the client proxy to one of the tunnels, but instead may be sent via a conventional data connection, e.g. a https data connection, to the destination server application.

It is noted that the first server may host multiple first server applications (not shown). When multiple first server applications are installed and running on the first server, in an embodiment, the first server proxy may use a load-balancing algorithm to forward a data packet to one of the first server applications based on the resources that are available for each of the first server applications.

Hence, in the system depicted in **Fig. 1****,** after installing the proxy-tunnel client, the proxy-tunnel client will set up one or more tunnels based on configuration information that may be sent via a cloud server to the client device and the client device may be configured to relay data packets associated with one or more client application to the proxy-tunnel client. A tunnel may be established using a suitable tunnel protocol. In an embodiment, the tunnels may be encrypted tunnels, wherein data transmitted via the tunnel are encrypted. An example of an encrypted tunnel is a SSH forwarding tunnel. To that end, the client proxy may be associated with a SSH client and the one or more server proxies may be associated with one or more SSH servers, which control the setup and encryption and decryption of data transmitted through the tunnel. Different encryption protocols may be used for encryption of the data. Instead of an encrypted SSH tunnel, any other suitable encrypted tunnel system may be used wherein each tunnel is established between a tunnel client associated with the client proxy and a tunnel server associated with a server proxy.

Hence, each tunnel may be associated with an encryption protocol, such as a quantum-safe encryption protocol, to ensure secure data communication between the client device and the one or more servers. The client device will forward data packets originating from client applications to the client proxy, which subsequently will forward the data packets based on an URL in the packet through a tunnel, e.g. a SSH forwarding tunnel, to the server proxy which - in turn - will forward packets to the destination server application, wherein - before being transmitted through the tunnel - data will be encrypted according to an encryption protocol. At the client side, the client proxy may listen at a particular port, e.g. port 9999. The client device is configured to use the proxy service for HTTP traffic so that HTTP packets are sent through port 9999. When an URL in an HTTP packet matches a server application in the forwarding table, then this packet is forwarded to the server proxy at port 2280. If no match is found, the packet may be sent via a conventional data connection, e.g. an HTTPS data connection to the server.

The proxy-tunnel client depicted in **Fig. 1** may be installed on the client device as a failover (inactive) service alongside applications. In an embodiment, the proxy-tunnel client may be activated by a backend administrator on-demand. This way, a quantum safe data connection between the client device and a server device may be established very fast, without the need to modify the client and server application software. The backend administrator may further disable the conventional connection to ensure that data packets are sent over the secure tunnel connection.

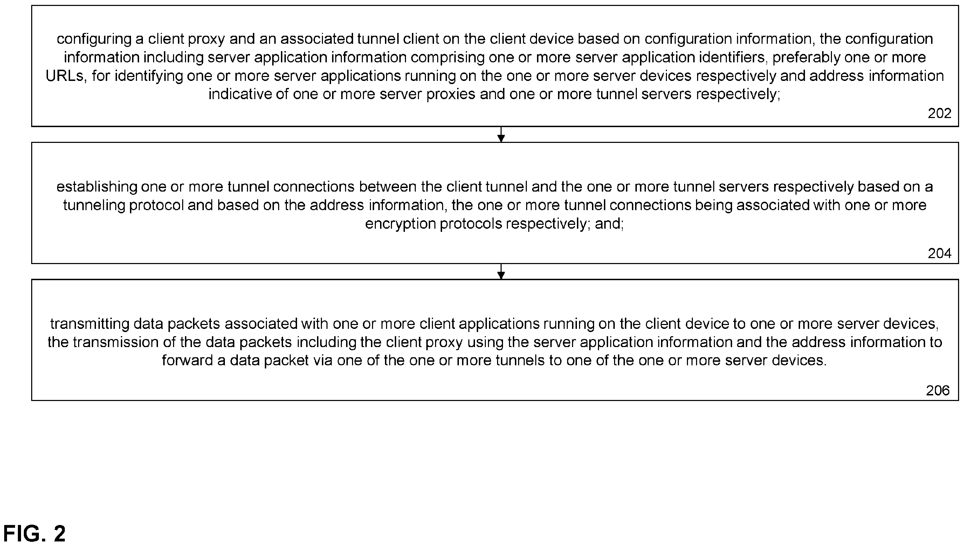

**Fig. 2** depicts a method of secure data communication between a client device and one or more server devices. The method may be executed on a system as for example depicted in **Fig. 1****.** The method may include a step **202** of configuring a client proxy and an associated tunnel client on the client device based on configuration information. The configuration information may include server application information comprising one or more server application identifiers, preferably one or more URLs, for identifying one or more server applications running on the one or more server devices respectively. The configuration information may also include address information indicative of one or more server proxies and one or more tunnel servers respectively; Further, the address information may include network addresses and port numbers of the tunnel server and the server proxy associated with the tunnel server. Here, a tunnel server and an associated server proxy may be referred to a proxy-tunnel server. A proxy-server client may use the configuration information to set up and manage a tunnel between the proxy-tunnel server and the proxy-tunnel client, wherein the tunnel may be identified by a tunnel identifier.

The method may further include the step **204** of establishing one or more tunnel connections between the client tunnel and the one or more tunnel servers respectively based on a tunnelling protocol and based on the address information, The one or more tunnel connections may be associated with one or more encryption protocols. Information about the tunnel server (e.g. an IP address or URL, a tunnel port and a tunnel identifier) and information about the associated server proxy (e.g. an IP address or URL and forwarding port number) in the configuration information may be used to set up the tunnel between the proxy-tunnel client and proxy-tunnel server and to configure the proxy-tunnel client to forward data packets via a tunnel to a proxy-tunnel server. Each tunnel may be associated with an encryption protocol, preferably a quantum safe encryption protocol. Further, in an embodiment, if multiple tunnels are established, some of these tunnels may be associated with different quantum safe encryption protocols.

Further, data packets associated with one or more client applications running on the client device may be transmitted to one or more server devices (step 206). The transmission of the data packets may include the client proxy using the server application information and the address information to forward a data packet via one of the one or more tunnels to one of the one or more server devices.

In some embodiments, depending on the server application identifier, the proxy-tunnel client may transmit a data packet to a server device over one of the one or more tunnel connections. In an embodiment, the transmission of the data packets may include forwarding the data packets to the client proxy, wherein if the server application identifier in a data packet matches one of the one or more server application identifiers in the configuration information then the client proxy may transmit the data packet via one of the one or more tunnels to one of the one or more server applications. In another embodiment, if the server identifier in a data packet does not match one of the one or more server application identifiers, the client proxy may transmit the data packet via a further data connection, e.g. a conventional https data connection, to a server application identified by the server application identifier. The further data connection may be associated with an encryption protocol that is different from the one or more encryption protocols associated with the one or more tunnels.

In an embodiment, the one or more first data connections may include transmission of encrypted data via one or more tunnels wherein the encrypted data are encrypted based on a quantum-safe encryption protocol. In a further embodiment, the further data connection may be configured to transmit encrypted data using a legacy encryption protocol, e.g. a HTTPS data connection that uses TLC. Hence, the method uses a proxy system in combination with a tunnel system to realize multiple encrypted tunnels for data communication for fast realization of quantum-safe data end-to-end data communication without the need to change the client and server application software. This is particular advantageous when fast migration from data communication based on a legacy encryption system to data communication based on quantum-safe encryption system is needed.

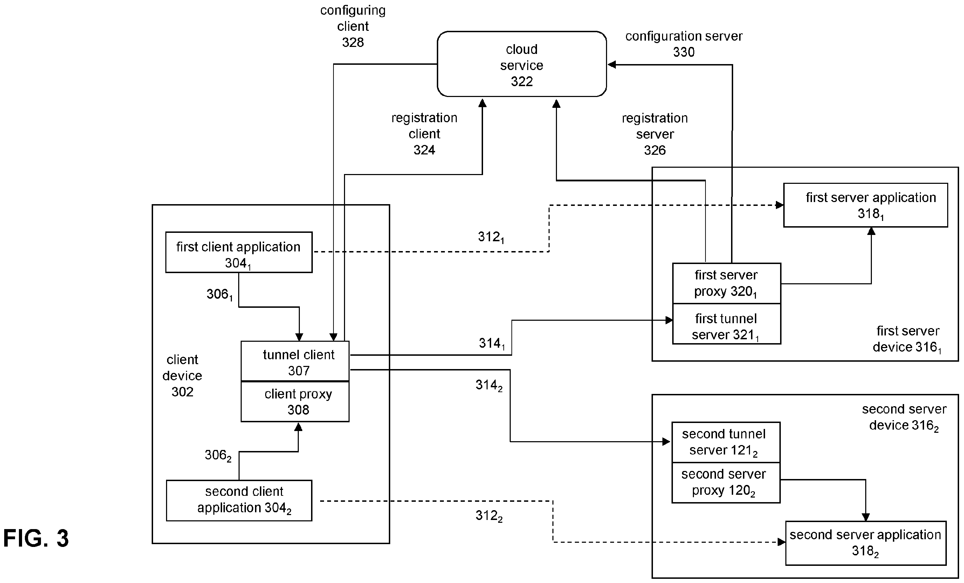

**Fig. 3** depicts a system for secure data communication in which the configuration of the proxy system comprising the client and the server proxies is illustrated. Similar to **Fig. 1****,** the system may comprise a client device **102** and one or more servers, e.g. a first server **116₁** and a second server **116₂** (which may be referred to as secure servers). The client device may be configured to run client applications, e.g. a first and second client application **104_{1,2}**, which may be configured to establish conventional data connections **112_{1,2}**, e.g. conventional HTTPS data connections, with the associated server applications **118_{1,2}** on the servers, e.g. a first server application running on the first server and a second server application running on the second server. As described with reference to **Fig. 1****,** where a client proxy and server proxies are installed, secure data connections **314_{1,2}** in the form of one or more tunnels may be established as secure data connections between the client applications and the server applications. The one or more tunnels may be configured as encrypted tunnels which are establish between a tunnel client associated with the client proxy and one or more tunnel servers associated with the one or more server proxies respectively. A cloud service **322,** e.g. a cloud application, running in the cloud or on a system of server devices, may be configured to securely setup and configure one or more client proxies **308** and one or more server proxies **320_{1,2}** at one or more client devices **302** and one or more server devices **316_{1,2}** respectively.

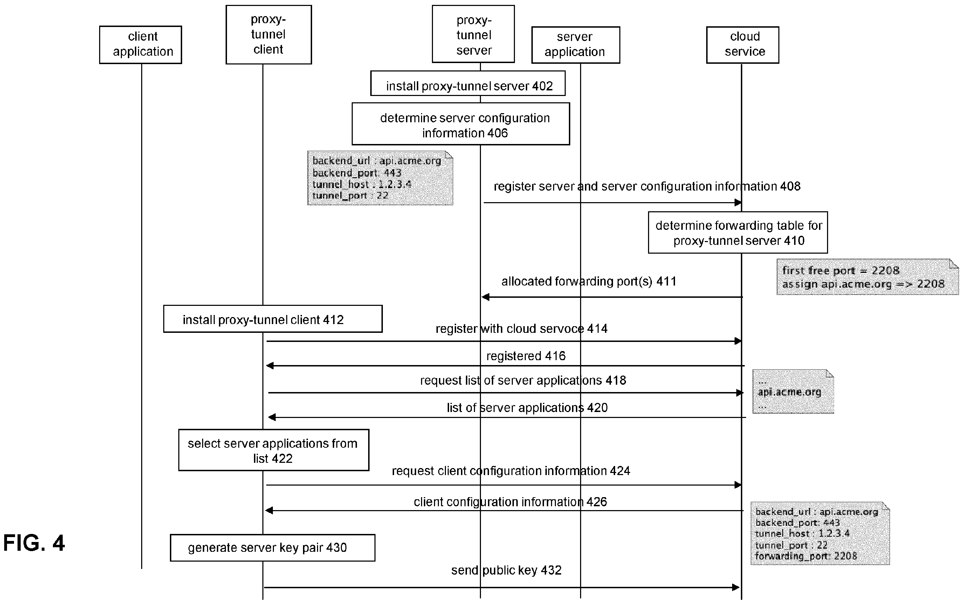

An example of a method for setup and configuration of a system for secure data communication according to an embodiment is illustrated in **Fig. 4****.** The figure depicts a sequence diagram for setting up a proxy-tunnel system as described with reference to **Fig. 1-****3.** The process may include installing proxy-tunnel server on a server device (step **402**) wherein the proxy-tunnel server is configured to host a tunnel server, which is configured to establish an encrypted tunnel with a tunnel client that may be part of a client proxy on a client device. As shown in the figure, the installation may include determining server configuration information (step **406**), i.e. information about the installed proxy-tunnel server, e.g. an IP address and a tunnel port of a tunnel server (e.g. 1.2.3.4:22), a tunnel identifier for identifying the tunnel that is setup between the proxy-tunnel server and a proxy-tunnel client, an IP address or URL of the server proxy (e.g. localhost1) and one or more server applications identifiers and port numbers (e.g. api.acme.org:443) for identifying server applications running on the server device. The installation may be registered with the cloud service by sending a message to the cloud server to register the server with a cloud service (step **408**). Further, the server configuration information may be provided to the cloud service, which may store the information as part of configuration information for a proxy-tunnel client.

In response to the registration message, the cloud service may determine a forwarding table for the proxy-tunnel server (step **410**). To that end, the cloud server may assign a free forwarding port, e.g. port 2208, to the server application identifier api.acme.org. The cloud service may subsequently send the allocated forwarding port to the proxy-tunnel server (step **411**) so that the server proxy knows that data received at port 2208 originate from a specific tunnel and need to be forwarded to a server application (in this example api.acme.org).

The process may also include installing a proxy-tunnel client on a client device (step **412**). The proxy-tunnel client installation may configure the client device to relay data traffic, e.g. data packets, originating from one or more client applications on the client device to the proxy-tunnel client, e.g. based on a local port number associated with the proxy-tunnel client. After installation, the proxy-tunnel client may register itself with the cloud service (steps **414** and **416**) and request a list of server applications that require a secure tunnel connection (steps **418** and **420**). Then, server applications may be selected (step **422**) for which an associated client application is running on the client device. Then, the proxy-tunnel client may request configuration information for the selected server applications (step **424**). To that end, in an embodiment, the request may include identifiers for identifying the selected server applications.

The cloud service may subsequently send configuration information to the client (step **426**). As shown in the figure, the configuration information may include information regarding the server applications (e.g. an IP address or URL and a port number) and information regarding one or more proxy-tunnel servers that host secure tunnel connections (e.g. an IP address and port of the tunnel server and an IP address and forwarding port of the server proxy). The proxy-tunnel client will use the configuration information to establish one or more secure tunnels and to route packets originating from client applications via tunnels to server applications.

The client proxy may generate a public-private key pair (step **430**) that is needed to set up a tunnel between the client proxy and the server proxy. The public key may be sent to the cloud service for later use (step **432**). After the execution of these step, the client device comprising the proxy-tunnel client and the server device comprising the proxy-tunnel server are configured for usage.

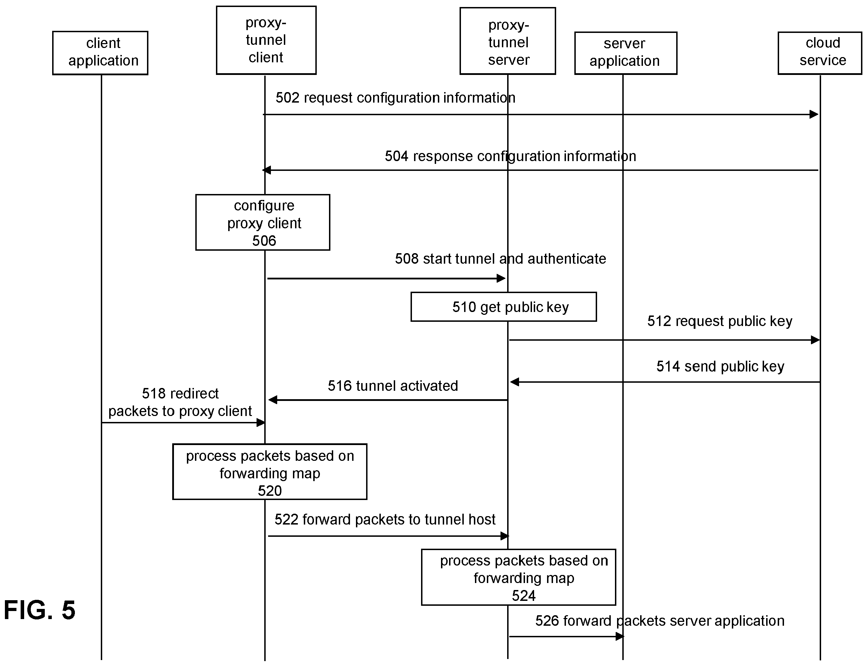

**Fig. 5** depicts a sequence diagram of a method for secure data communication according to an embodiment. The proxy-tunnel client, which is installed on a client device, may be pre-configured based on configuration information (e.g. during installing). In a further embodiment, the proxy-tunnel client may be activated, e.g. by a user or via another trigger, to send a request for configuration information to the cloud server (step **502**) in order retrieve the most recent information about server applications that require a secure tunnel connection. In response, the cloud service may send a response comprising the requested configuration information (step **504**), wherein the configuration information may include information regarding the server applications (e.g. an IP address or URL and a port number) and information regarding one or more proxy-tunnel servers that host secure tunnel connections (e.g. an IP address and port of the tunnel server and an IP address and forwarding port of the server proxy).

When receiving new configuration information, the proxy-tunnel client may be updated based on the configuration information (step **506**) so that it can establish tunnels for client applications running on the client device. To that end, the proxy-tunnel client may send a request for setting up a tunnel to a proxy-tunnel server as identified in the configuration information (step **508**). Here, a public key authentication process may be used to authenticate a proxy-tunnel server with the proxy-tunnel client, wherein the proxy-tunnel server may retrieve a public key that is associated with the private key of the proxy-tunnel client and send the private key to the proxy-tunnel client. If the proxy-tunnel server does not have the public key, it may request such public key with the cloud service (steps **512-514**). (this is possible because the client proxy has already shared the public key with the cloud service at an earlier stage, e.g. during setup of the client proxy).

If the authentication is successful, the tunnel between the proxy-tunnel client and the proxy-tunnel server may be established. Thereafter, data packets originating from client application may be redirected to the client proxy (step **518**) which subsequently processes the packets based on the server application identifier in the packets and the forwarding table (step **520**) which relates different server application identifiers to one or more proxy-tunnel servers identified by an IP address and a forwarding port. This way, packets may be forwarded to the proxy-tunnel server over a secure encrypted tunnel connection in accordance with the forwarding table (step **522**). The proxy-tunnel server subsequently processes packets (step **524**) by relaying the data packets originating from the forwarding port to a server application (step **526**) based on the server application identifier in the packets.

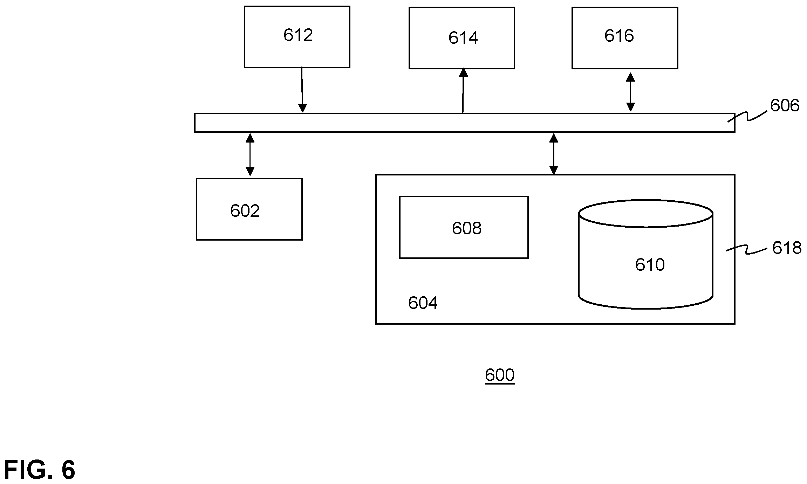

The devices and systems described with reference to embodiments in these disclosures, such as the client device, the server system and the content preparation system are typically implemented as one or more communicatively connected data processing systems. **Fig. 6** is a block diagram illustrating an exemplary data processing system that may be used in as described in this disclosure. Data processing system **600** may include at least one processor **602** coupled to memory elements **604** through a system bus **606.** As such, the data processing system may store program code within memory elements **604.** Further, processor **602** may execute the program code accessed from memory elements **604** via system bus **606.** In one aspect, data processing system may be implemented as a computer that is suitable for storing and/or executing program code. It should be appreciated, however, that data processing system may be implemented in the form of any system including a processor and memory that is capable of performing the functions described within this specification.

Memory elements **604** may include one or more physical memory devices such as, for example, local memory **608** and one or more bulk storage devices **610.** Local memory may refer to random access memory or other non-persistent memory device(s) generally used during actual execution of the program code. A bulk storage device may be implemented as a hard drive or other persistent data storage device. The data processing system **600** may also include one or more cache memories (not shown) that provide temporary storage of at least some program code in order to reduce the number of times program code must be retrieved from bulk storage device **610** during execution.

Input/output (I/O) devices depicted as input device **612** and output device **614** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **616** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system.

As pictured in **Fig. 6****,** memory elements **604** may store an application **618.** It should be appreciated that data processing system may further execute an operating system (not shown) that can facilitate execution of the application. Application, being implemented in the form of executable program code, can be executed by data processing system, e.g., by processor **602.** Responsive to executing application, data processing system may be configured to perform one or more operations to be described herein in further detail.

In one aspect, for example, data processing system may represent a client data processing system. In that case, application **618** may represent a client application that, when executed, configures data processing system to perform the various functions described herein with reference to a "client". Examples of a client can include, but are not limited to, a personal computer, a portable computer, a mobile phone, or the like. In other aspects, data processing system may represent a server data processing system. In that case, application **618** may represent a server application that, when executed, configures data processing system to perform the various functions described herein with reference to a "server".

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method for secure data communication between a client device and one or more server devices, the method comprising:
configuring a client proxy and an associated tunnel client on the client device based on configuration information, the configuration information including server application information comprising one or more server application identifiers, preferably one or more URLs, for identifying one or more server applications running on the one or more server devices respectively and address information indicative of one or more server proxies and one or more tunnel servers respectively;
establishing one or more tunnel connections between the client tunnel and the one or more tunnel servers respectively based on a tunneling protocol and based on the address information, the one or more tunnel connections being associated with one or more encryption protocols respectively; and,
transmitting data packets associated with one or more client applications running on the client device to one or more server devices, the transmission of the data packets including the client proxy using the server application information and the address information to forward a data packet via one of the one or more tunnels to one of the one or more server devices.

2. Method according to claim 1, wherein each data packet includes a server application identifier for identifying a destination server application to which the data packet needs to be sent, the client proxy forwarding the data packet if the server application identifier in the data packet matches one of the one or more server application identifiers in the configuration information.

3. Method according to claims 1 or 2, wherein the transmission of the data packets further includes forwarding a data packet via a further data connection, preferably a https data connection, to a server application identified by the server identifier, the further data connection being associated with an encryption protocol that is different from the one or more encryption protocols associated with the one or more tunnels.

4. Method according to any of claims 1-3 wherein the address information includes network addresses and/or port numbers associated with the one or more tunnel servers and/or one or more server proxies.

5. Method according to any of claims 1-4 wherein the one or more encryption protocols are based on a post-quantum encryption protocol, preferably a post-quantum encryption protocol based at least one of: a lattice-based cryptographic system, a multivariate-based cryptographic system, a Hash-based cryptographic system, a code-based cryptographic system; or, an elliptic curve-based cryptographic system.

6. Method according to any of claims 1-5 wherein a plurality of tunnel connections are established between the client tunnel and a plurality of tunnel servers and wherein at least part of the plurality of tunnels are associated with different encryption protocols.

7. Method according to any of claims 1-6 wherein the tunnel protocol is an application layer tunnel protocol, preferably a secure shell (SSH) tunnel protocol.

8. Method according to any of claims 1-7 wherein the data packet is a HTTP data packet transmitted based on a HTTP protocol to a server.

9. Method according to any of claims 1-8 wherein the client proxy uses a forwarding table to transmit the data packet to one of the one or more tunnels, the forwarding table including information for associating each of the one or more server application identifiers to a network address of one of the one or more proxy servers, preferably the network address including an IP address and a port number.

10. Method according to any of claims 1-9 wherein forwarding the data packets to the client proxy includes transmitting the data packets to a data port of the client proxy and/or wherein the client proxy is configured to forward data packets associated with a predetermined set of server application identifiers over the one or more tunnels.

11. Method according to any of claim 1-10 wherein the configuration information is sent from a cloud service associated with the one or more servers to the client device,

12. Method according to claim 11 further including:
authenticating the client proxy to server proxy based on an authentication protocol, preferably a public-private key authentication protocol, the authentication including sending a public key from the cloud server to the server proxy.

13. A client device for secure communication, comprising:
a computer readable storage medium having computer readable program code embodied therewith, and a processor, preferably a microprocessor, coupled to the computer readable storage medium, wherein responsive to executing the computer readable program code, the processor being configured to perform executable operations comprising:
configuring a client proxy and an associated tunnel client on the client device based on configuration information, the configuration information server application information comprising one or more server application identifiers, preferably one or more URLs, for identifying one or more server applications running on the one or more server devices respectively and address information indicative of one or more server proxies and one or more tunnel servers respectively;
establishing one or more tunnel connections between the client tunnel and the one or more tunnel servers respectively based on a tunneling protocol and based on the address information, the one or more tunnel connections being associated with one or more encryption protocols respectively; and,
transmitting data packets associated with one or more client applications running on the client device to one or more server devices, the transmission of the data packets including the client proxy using the server application information and the address information to forward a data packet via one of the one or more tunnels to one of the one or more server devices.

14. Client device according to claim 13 wherein the executable operations further comprise any of the method steps of claims 1-12.

15. Computer program product comprising software code portions configured for, when run in the memory of a computer, executing the method steps according to any of claims 1-12.
